# EUROPEAN PATENT APPLICATION

(11) **EP 1 525 970 A1**
(43) Date of publication of application: **27.04.2005**
(21) Application number: 04256349.4
(22) Date of filing: 14.10.2004
(51) Int. Cl.: B29C 45/17

(54) **Nozzle touch mechanism and injection molding machine**

(30) Priority: 21.10.2003 JP 2003360490
(71) Applicant: FANUC LTD, Minamitsuru-gun, Yamanashi 401-0597 (JP)
(72) Inventor: Yoshioka, Mitsushi Room 613, Minamitsuru-gun Yamanashi 401-0502 (JP); Hashimoto, Nobuaki, Fanuc Dai3virakaramatsu, Minamitsuru-gun Yamanashi 401-0511 (JP)
(74) Representative: Billington, Lawrence Emlyn

(57) **Abstract**

A nozzle touch mechanism for an injection molding machine comprises a ball screw (20) attached to a lower portion of a fixed platen (5) for rotation, thereby to move a nut member (21) forward and move an injection device (3) forward through a spring (22). By moving the injection device (3) forward, a nozzle (18) on a tip end of a screw cylinder (11) is abutted against the fixed platen (5), and a nozzle touch force is applied to the fixed platen (5) by a compressive force of the spring (22). A connection member (25) is provided between an upper portion of the fixed platen (5) and a front plate (12) of the injection device (3), so as to be able to connect or disconnect the fixed platen (5) to or from the front plate (12). Even if the nozzle touch force acts on the fixed platen (5), the fixed platen (5) is supported by the upper portion and the lower portion of the fixed platen (5) and is prevented from falling down.

## Description

### BACKGROUND OF THE INVENTION

### 1. Field of the Invention

The present invention relates to a nozzle touch mechanism and an injection molding machine that uses this nozzle touch mechanism.

### 2. Description of the Related Art

An injection molding machine is provided with a nozzle touch mechanism which moves an inj ection device forward relative to a fixed platen to which a fixed mold is attached, and which pressurizes a nozzle provided on a tip end of a screw cylinder that the injection device includes against the fixed platen by a predetermined nozzle touch force.

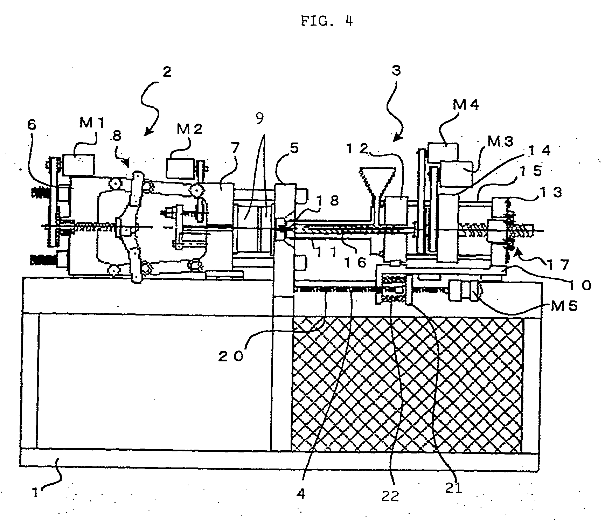

Fig. 4 is a schematic diagram of a conventional injection molding machine in which a clamping mechanism 2 and an injection device 3 are mounted on a base 1.

The clamping mechanism 2 is a mechanism that opens or closes and clamps molds 9 attached to a fixed platen 5 and a movable platen 7, respectively. The clamping mechanism 2 includes the fixed platen 5 and a rear platen 6 which are respectively fixedly attached to the base 1, a plurality of tie bars for connecting the fixed platen 5 to the rear platen 6, the movable platen 7 movable between the fixed platen 5 and the rear platen 6 along the tie bars, and a toggle mechanism 8 that drives the movable platen 7 to open or close and clamp the molds 9 attached to the movable platen 7 and the fixed platen 5, respectively.

The injection device 3 is attached onto an extruder base 10 that constitutes a nozzle touch mechanism 4, and includes a screw cylinder 11, a front plate 12 to which the screw cylinder 11 is attached, a rear plate 13, a guide bar 15 provided between the front plate 12 and the rear plate 13, and a pusher plate 14 moving along the guide bar 15. An injection screw 16 is attached to this pusher plate 14 so as to be rotatable in the screw cylinder 11 and axially immovable relative to the pusher plate 14. By driving this pusher plate 14 in the transverse direction in Fig. 4 by a ball screw and nut mechanism 17, the injection screw 16 is moved in an axial direction of the screw 16 and performing injection molding. In Fig. 4, reference symbol M3 denotes an injection servo motor that drives the ball screw and nut mechanism 17. Reference symbol M4 denotes a measuring servo motor that rotates the injection screw 16 to perform resin metering and kneading. Reference symbol M1 denotes a clamping servo motor that drives the clamping mechanism 2. Reference symbol M2 denotes an ejector servo motor.

The nozzle touch mechanism 4 includes a ball screw and nut mechanism that constitutes moving means for moving forward or backward the extruder base 10 on which the injection device 3 is mounted. This ball screw and nut mechanism is composed of a ball screw 20 rotatably attached to the base 1 or the fixed platen 5 and a nut member 21 including a ball nut screwed with the ball screw 20. A spring 22 is provided between the nut member 21 and the extruder base 10.

When a nozzle touch driving motor M5 is driven to rotate the ball screw 20, the nut member 21 is moved forward to push the extruder base 10 through the spring 22. As a result, the extruder base 10 and the injection device 3 are moved toward the fixed platen 5, and the nozzle 18 provided on the tip end of the screw cylinder 11 is abutted on the fixed platen 5. When the motor M5 is further driven to rotate the ball screw 20, the nut member 21 is further moved forward while compressing the spring 22, and a nozzle touch force is produced according to a compression amount of the spring 22.

The fixed platen 5 having a lower end fixed to the base 1 is inclined toward the movable platen 7 when receiving the nozzle touch force in its central portion. When the fixed platen 5 is inclined, a parallelism between the mold 9 attached to the fixed platen 5 and the mold 9 attached to the movable platen 7 is lost, thereby disadvantageously causing a failure.

To prevent the failure, Japanese Patent Application Laid-Open No. 2003-11162 discloses how to prevent an inclination of a fixed platen toward a movable platen caused by a nozzle touch force, by arranging a nozzle touch mechanism between an upper portion of a fixed platen having the lower end fixed to a base and an upper portion of an injection device, and connecting an upper end of the fixed platen to the nozzle touch mechanism through an engagement section.

However, since this nozzle touch mechanism is arranged on the upper portion of the injection device, a weight of the injection device is increased, a stability of the injection device is deteriorated, and the nozzle touch mechanism hinders an operation of the injection device. Further, a transmission mechanism such as the ball screw and nut mechanism for moving this injection device is arranged on an upper portion of a band heater or the like that heats the screw cylinder. Due to this arrangement, when a heat generated by this band heater or the like is transmitted to this transmission mechanism, a mobility of a lubricant supplied to the transmission mechanism is increased by the heat. As a result, the dripping of the lubricant or the like disadvantageously occurs.

Moreover, when an operation for replacement or maintenance of the injection screw is performed, the injection device is moved backward and turned. In this case, however, since the nozzle touch mechanism is arranged between the fixed platen and the injection device, the injection device cannot be turned unless this nozzle touch mechanism is disassembled. This makes it disadvantageously difficult to carry out the screw replacement and maintenance operation.

### SUMMARY OF THE INVENTION

The present invention relates to a nozzle touch mechanism which pushes a nozzle provided on a tip end of a screw cylinder fixed to a front plate of an injection device arranged to be opposed to a fixed platen fixed onto a base, against the fixed platen by a predetermined nozzle touch force. The nozzle touch mechanism comprises: moving means which is arranged on the base side and which moves the injection device toward the fixed platen; an elastic body which is engaged with the moving means and which produces the predetermined nozzle touch force by moving the moving means; and a connection member which is arranged on a side opposite the moving means with respect to the screw cylinder and which connects or disconnects the fixed platen to or from the front plate.

The nozzle touch mechanism according to the preset invention can have the following aspects.

The elastic member is a spring, and the predetermined nozzle touch force is produced according to a compression amount of the spring, and the nozzle touch mechanism further comprises Sensors which are arranged in a compression direction and an expansion direction of the spring, respectively and which are capable of measuring the compression amount of the spring and measuring an expansion amount of the spring; and notification means for notifying that the spring reaches a predetermined compression amount using the sensors.

The nozzle touch mechanism further comprises a connection detection sensor for detecting whether the fixed platen is connected to by the connection member, or disconnected from, the front plate.

One end of the connection member is connected to the fixed platen or the injection device through a joint whose connection angle can be changed, and the other end of the connection member is connected to the front plate by detachable fixing means.

Further, according to the present invention, there is provided an injection molding machine which comprises the aforementioned nozzle touch mechanism, and further comprises a controller that controls the injection device to be moved backward in accordance with a mold opening operation, and that stops moving the injection device backward and displays an indication to detach the connection member when the sensor that measures the expansion amount notifies that the spring reaches the predetermined expansion amount.

Since the present invention includes the aforementioned constitutions, it is possible to prevent the fixed platen from falling down with the simple constitution. Further, because of the simple constitution, the nozzle touch mechanism does not become an operation hindrance, facilitates an operation for rotating an injection device when the injection device is to be rotated, and facilitates maintenance of the injection device.

### BRIEF DESCRIPTION OF THE DRAWINGS

The forgoing and other objects and feature of the invention will be apparent from the following description of preferred embodiments of the invention with reference to the accompanying drawings, in which:
Fig. 1 is an explanatory view for principal parts of an injection molding machine that includes a nozzle touch mechanism of one embodiment according to the present invention;
Fig. 2 is an explanatory view for connection and disconnection between a fixed platen and a front plate by a connection member that constitutes a nozzle touchmechanism shown in Fig. 1;
Fig. 3 is a flowchart showing procedures for a nozzle touch operation, a nozzle touch operation release operation, and the like performed by the nozzle touch mechanism shown in Fig. 1; and
Fig. 4 is an explanatory view for one example of a conventional injection molding machine that includes a nozzle touch mechanism.

### DESCRIPTION OF THE EMBODIMENT

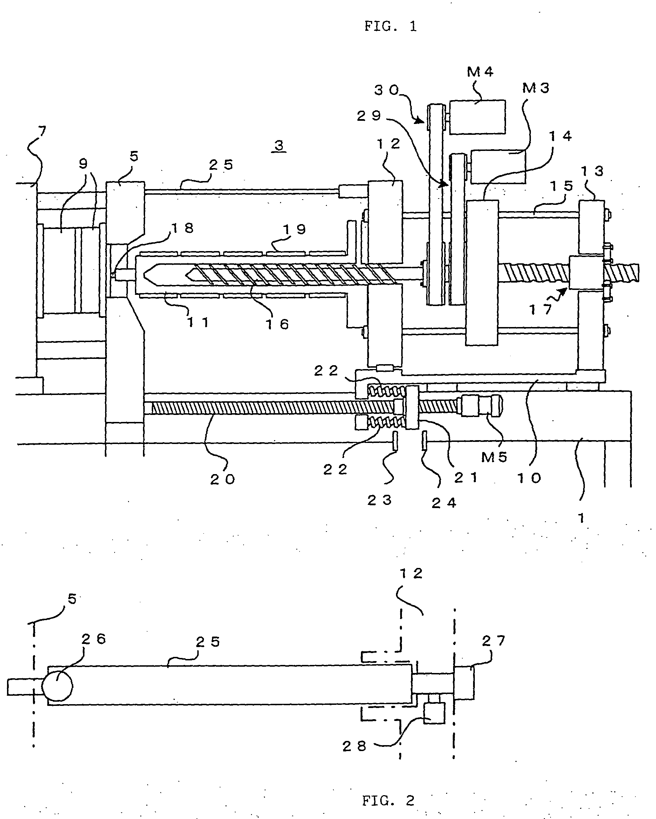

Fig. 1 is an explanatory view for principal parts of an injection molding machine that includes a nozzle touch mechanism of one embodiment according to the present invention. A nozzle touch mechanism in the injection molding machine shown in Fig. 1 differs from the conventional nozzle touch mechanism shown in Fig. 4 in that a connection member 25 is provided between a fixed platen 5 and a front plate 12 of an injection device 3, in the embodiment.

Referring to Fig. 1, the injection device 3 is attached onto a base 1 through an extruder base 10. The injection device 3 includes the front plate 12 to which a screw cylinder 11 is attached, a rear plate 13, a pusher plate 14, a plurality of guide bars 15 provided between the front plate 12 and the rear plate 13, and the like.

An injection screw 16 is attached to the pusher plate 14 so as to be rotatable in the screw cylinder 11 and axially immovable relative to the pusher plate 14. This pusher plate 14 is engaged with a ball screw and nut mechanism 17. When an injection servo motor M3 is driven to rotate the ball screw and nut mechanism 17 through a transmission means 29 including a timing belt, a toothed pulley, and the like, the pusher plate 14 is moved along the guide bars 15 in the transverse direction in Fig. 1. As a result, the injection screw 16 is moved forward or backward. Further, by driving a metering servo motor M4 to rotate the injection screw 16 through a transmission means 30 including a timing belt, a toothed pulley, and the like, resin metering and kneading are performed.

A nozzle touch mechanism moving means for moving the extruder base 10 and thereby moving the injection device 3 is composed of a ball screw and nut mechanism, a spring 22, and the rod-like connection member 25. This ball screw and nut mechanism is composed of a ball screw 20 rotatably attached to the base 1 or the fixed platen 5 and a nut member 21 including a ball nut screwed with the ball screw 20. This ball screw 20 is driven by a nozzle touch driving motor M5. The spring 22 is provided between the nut member 21 and the extruder base 10. The nut member 21 is engaged with a guide rod (not shown) , whereby the nut member 21 is made movable in the axial direction of the ball screw 20 and non-rotatable around the axis of the ball screw 20. The spring 22 is wound around this guide rod.

When the nozzle touch driving motor M5 is driven to rotate the ball screw 20, the nut member 21 is moved forward to push the extruder base 10 through the spring 22. As a result, the extruder base 10 and the injection device 3 are moved toward the fixed platen 5, and a nozzle 18 provided on a tip end of the screw cylinder 11 is abutted against the fixed platen 5. When the motor M5 is further driven to rotate the ball screw 20, the nut member 21 is further moved forward while compressing the spring 22, and a nozzle touch force is produced according to a compression amount of the spring 22. Reference symbol 19 denotes a heater that heats the screw cylinder 11. The constitution of the nozzle touch mechanism described so far is equal to that of the conventional nozzle touch mechanism shown in Fig. 4.

According to this embodiment, the nozzle touch mechanism further includes a sensor (switch) 23 for detecting an expansion amount of the nozzle touch force setting spring 22, and a sensor (switch) 24 for temporarily stopping the nozzle touch driving motor M5 when the spring 22 is expanded and the nut member 21 is moved backward. The sensors 23 and 24 outputs signals when detecting the nut member 21. Furthermore, the rod-like connection member 25 is provided between the fixed platen 5 and the front plate 12 of the injection device 3 to be able to freely connect or disconnect the fixed platen 5 to or from the front plate 12. The nozzle touch mechanism in this embodiment thus differs from the conventional nozzle touch mechanism shown in Fig. 4 by these constituent elements.

Fig. 2 is an explanatory view for connection and disconnection between the fixed platen 5 and the front plate 12 by this connection member 25. The connection member 25 is detachably attached to the fixed platen 5 and the front plate 12. In the example of Fig. 2, one end of the connection member 25 is connected to the fixed platen 5 through a ball joint 26 that is a joint a connection angle of which can be changed. The other end of the connection member 25 is attached to the front plate 12 through a fixing means such as a bolt 27.

By fixing the other end of the connection member 25, one end of which is connected to the fixed platen 5 through the ball joint 26, to the front plate 12 through the bolt 27 or the like, the fixed platen 5 is connected to the front plate 12. The connection between the fixed platen 5 and the front plate 12 using this connection member 25 is detected by a connection detection sensor 28. If the front plate 12 is not connected to the fixed platen 5 by the connection member 25, with the bolt 27 not inserted into a hole of the front plate 12, the connection detection sensor 28 cannot detect insertion of the bolt 27 into the hole of the front plate 12, and notifies that the fixed platen 5 is not connected to the front plate 12.

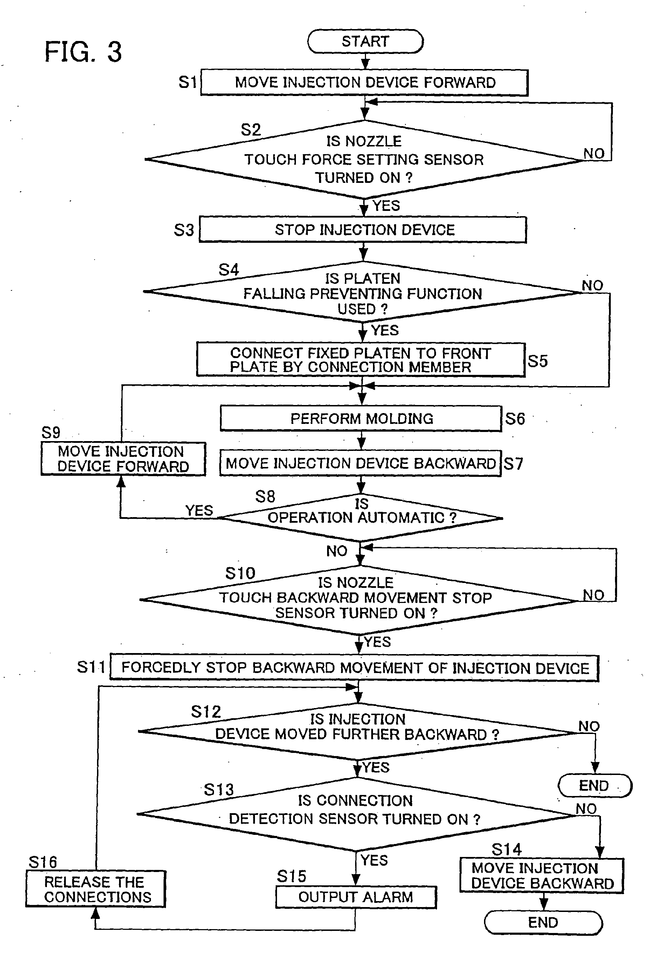

Fig. 3 is a flowchart which shows procedures for a nozzle touch operation, a nozzle touch operation release operation, and the like performed by the nozzle touch mechanism shown in Fig. 1.

When a nozzle touch instruction is issued, the motor M5 is driven in a forward direction to thereby rotate the ball screw 20 and to move the nut member 21, which is screwed with the ball screw 20 and rotation of which is prohibited by the guide rod, in an axial direction of the ball screw 20. As a result, the nut member 21 pushes the extruder base 10 through the spring 22, thereby moving forward the injection device 3 together with the extruder base 10 toward the fixed platen 5 (at step S1). By moving the injection device 3 forward, the nozzle 18 provided on the tip end of the screw cylinder 11 is abutted against the fixed platen 5, and the forward movement of the injection device 3 is stopped. At this time, when the motor M5 is further driven to rotate the ball screw 20, the nut member 21 is moved further forward while compressing the spring 22. When the nut member 21 arrives at a position corresponding to a preset nozzle touch force, the nozzle touch force setting sensor 23 is turned on (at step S2). By turning on the sensor 23, the driving of the motor M5 is stopped and a forward movement operation for moving forward the nut member 21 (a compression operation for compressing the spring 22) is stopped.

If injection molding operation is performed using the connection member 25 shown in Fig. 2, the connection member 25 is fixed to the front plate 12 of the injection device 3 using the bolt 27 to thereby connect the fixed platen 5 to the front plate 12 (at steps S4 to S6). On the other hand, if the injection molding is performed without using the connection member 25, the processing proceeds from step S4 directly to step S6.

When inj ection molding operation is finished, the rotation of the motor M5 is reversed, thereby moving the nut member 21 backward by a predetermined amount, expanding the spring 22, and reducing the nozzle touch force (at step S7). This operation for moving the nut member 21 backward to reduce the nozzle touch force can be performed even in a state in which the fixed platen 5 and the front plate 12 are still firmly connected to each other by means of the connection member 25.

If an operation is automatic (step S8), the nozzle touch driving motor M5 is driven in,the forward direction again to thereby move the injection device 3 forward. As described, the motor M5 is driven until the nut member 21 arrives at the position at which the sensor 23 is turned on and the set nozzle touch force can be attained (at step S9), and injection molding operation is performed. In case of automatic operation, this processing is repeatedly carried out.

If an operation is a manual operation (step S8), on the other hand, the motor M5 is further rotated in the counter direction in response to a manual instruction, thereby moving the nut member 21 backward, expanding the spring 22, and reducing the nozzle touch force. When the motor M5 is continuously driven in the counter direction, the nut member 21 pushes an end portion of the guide rod, thereby moving the extruder base 10 and the injection device 3 backward. At this time, if the backward movement of the nut member 21 is detected by the sensor 24 for temporarily stopping the motor M5 when the nozzle touch force is reduced (at step S10), the motor M5 is stopped (at step S11) and the backward movement of the injection device 3 is forcedly stopped. In this case, it is undesirable that the motor M5 be continuously driven in the counter direction until the nut member 21 exceeds the position detected by the sensor 24 and is moved further backward, and that the injection device 3 is moved backward while the fixed platen 5 is kept connected to the front plate 12 by the connection member 25. Therefore, a setting position of the sensor 24 for stopping the nozzle touch driving motor M5 is determined so that the motor M5 can be forcedly stopped at or near a position where the nozzle touch force is reduced to "0" as a result of backward movement of the nut member 21 and resultant release of the compression of the spring 22.

When an instruction of a further backward movement is input (step S12), if the fixed platen 5 is not connected to the front plate 12 through the connecting member 25, with the result that the connection detection sensor 28 does not detect the connection of the connecting member 25 (step S13), then the motor M5 is further driven in the counter direction to thereby move the injection device 3 backward (S14).

If the connection detection sensor 28 detects the connection of the connecting member, on the other hand, then an alarm is output and a message or the like to urge the release of connection by means of the connecting member 25 is displayed on a display unit or the like of the injection molding machine (step S15). In this case, an operator releases the connection of the front plate 12 and the connection member 25 by means of the bolt 27, and further release the connection of the fixed platen 5 and the front plate 12 (step S16). Then, as described, the injection device 3 is moved backward.

As stated so far, according to this embodiment, the lower end of the fixed platen 5 is fixed to the base 1, and the upper portion of the fixed platen 5 is fixedly connected to the front plate 12 by means of the connection member 25 when the nozzle touch force acts on the fixed platen 5. It is, therefore, possible to prevent the fixed platen 5 from falling down by the nozzle touch force. Besides, as this connection member 25 may be a simple rod, the nozzle touch mechanism according to this embodiment does not cause a great increase in the weight of the injection device 3, and does not hinder the operation of the injection device 3. Furthermore, since the fixed platen 5 can be connected to the front plate 12 by means of the connection member 25 and the bolt 27, the connection operation and the connection release operation can be made simple. With this configuration, even when the injection device 3 is moved backward and turned on the extruder base 10 for the replacement or maintenance of the injection screw 16, the connecting member 25 can be freely shifted, without hindering the turning operation of the injection device 3, by removing the bolt 27 and detaching the connection member 25 from the front plate 12, since the connection member 25 is connected to the fixed platen 5 by means of the ball joint 26.

## Claims

1. A nozzle touch mechanism for pushing a nozzle provided on a tip end of a screw cylinder fixed to a front plate of an injection device arranged to be opposed to a fixed platen fixed onto a base, against said fixed platen by a predetermined nozzle touch force, the nozzle touch mechanism comprising:
moving means, arranged on the base side, for moving said injection device toward said fixed platen;
an elastic body, engaged with said moving means, for producing said predetermined nozzle touch force by moving the moving means; and
a connection member, provided on a side opposite said moving means with respect to said screw cylinder, for connecting or disconnecting said fixed platen to or from said front plate.

2. The nozzle touch mechanism according to claim 1, wherein
said elastic member is a spring, and said predetermined nozzle touch force is produced according to a compression amount of the spring, and
the nozzle touch mechanism further comprises sensors, arranged in a compression direction and an expansion direction of said spring, respectively, which are capable of measuring the compression amount of said spring and measuring an expansion amount of said spring, and notification means for notifying that said spring reaches a predetermined compression amount using said sensors.

3. The nozzle touch mechanism according to claim 1, further comprising a connection detection sensor for detecting whether said fixed platen is connected to by said connection member, or disconnected from, said front plate.

4. The nozzle touch mechanism according to claim 1, wherein
one end of said connection member is connected to the fixed platen or said injection device through a joint whose connection angle can be changed, and the other end of said connection member is connected to the front plate by detachable fixing means.

5. An injection molding machine comprising the nozzle touch mechanism recited in any one of claims 1 to 4, and further comprising a controller that controls said injection device to be moved backward in accordance with a mold opening operation, and that stops moving the inj ection device backward and displays an indication to detach said connection member when the sensor that measures said expansion amount notifies that said spring reaches the predetermined expansion amount.
